# EUROPÄISCHE PATENTANMELDUNG

(11) **EP 2 009 367 A2**
(43) Veröffentlichungstag der Anmeldung: **31.12.2008**
(21) Anmeldenummer: 08009886.6
(22) Anmeldetag: 30.05.2008
(51) Int. Cl.: F24J 2/46

(54) **Verbindungselement für Solarkollektoren**

(30) Priorität: 29.06.2007 DE 202007009182 U
(71) Anmelder: Witzenmann GmbH, 75175 Pforzheim (DE)
(72) Erfinder: Abraham, Christoph, 75180 Pforzheim (DE); Foitzik, Peter, 75242 Neuhausen-Schellbronn (DE); Gehring, Matthias, 75334 Straubenhardt (DE); Glas, Jochen, 75233 Tiefenbronn-Lehningen (DE); Kämpfe, Andreas, Dr., 75173 Pforzheim (DE); Klein, Tobias, 76137 Karlsruhe (DE); Michelfelder, Bernd, Dr., 76161 Karlsruhe (DE); Holweg, Karsten, 75181 Pforzheim (DE)
(74) Vertreter: Nübold, Henrik

(57) **Zusammenfassung**

Eine Verbindungsanordnung (1) für Solarkollektoren (2.1, 2.2), die im Betrieb von einem zu erwärmenden Fluid durchströmt sind und die entsprechende Anschlussteile (3.1, 3.2) aufweisen, mit einem flexiblen metallischen Verbindungsteil (4) zum paarweisen Verbinden der Anschlussteile (3.1, 3.2), zeichnet sich dadurch aus, dass das Verbindungsteil (4) in einem Bereich seiner Längserstreckung an einer Trennstelle (5) in wenigstens zwei Verbindungselemente (4.1, 4.2) geteilt ist, wobei die Verbindungselemente (4.1, 4.2) an der Trennstelle (5) lösbar zu dem Verbindungsteil (4) verbindbar sind.

## Beschreibung

Die vorliegende Erfindung betrifft eine Verbindungsanordnung nach dem Oberbegriff des Schutzanspruchs 1 für Solarkollektoren, die im Betrieb von einem zu erwärmenden Fluid durchströmt sind und die entsprechende Anschlussteile aufweisen, wobei die Verbindungsanordnung ein flexibles metallisches Verbindungsteil zum paarweisen Verbinden der Anschlussteile umfasst.

Zur solaren Warmwassergewinnung werden in der Regel Kollektorfelder verwendet, die aus einzelnen Solarkollektoren bestehen. Dabei müssen die Solarkollektoren hydraulisch miteinander verbunden werden. Die Verbindung ist so zu gestalten, dass sie einerseits fluiddicht, insbesondere dampfdicht ist und andererseits den Ausgleich von Montagetoleranzen, Fertigungstoleranzen sowie thermischen Dehnungen erlaubt.

Aus dem Stand der Technik ist bekannt, Anschlussteile von Solarkollektoren unter Verwendung eines flexiblen metallischen Elements oder Verbindungsteils in Form eines Metallbalgs oder Metallschlauchs zu verbinden, wobei das Verbindungsteil beidseitig über Steck- oder Schraubverbindungen mit den Anschlussteilen der zu verbindenden Solarkollektoren verbunden wird. Die Anschlussverbindungen des Verbindungsteils mit den Solarkollektoren liegen dabei in den Endbereichen des Verbindungsteils unmittelbar an den Solarkollektoren und sind somit relativ schlecht zugänglich, wenn in einem Kollektorfeld Solarkollektoren eng benachbart angeordnet sind (oft beträgt der Montagespalt zwischen den Rahmen zweier Solarkollektoren weniger als 50 mm).

Bei Verwendung von Verbindungsanordnungen nach dem vorstehend beschriebenen Stand der Technik müssen die Solarkollektoren nacheinander montiert werden. Dabei muss die Verbindungsanordnung an einem bereits auf einer Tragkonstruktion, in der Regel auf einem Dach, befestigten Solarkollektor montiert werden. Danach wird der nächste Solarkollektor seitlich an den bereits befestigten Solarkollektor geschoben, hierbei die Verbindungsanordnung ineinandergesteckt und montiert, und dann der Solarkollektor auf der Tragkonstruktion befestigt. Die Montage muss dabei zwingend in Richtung einer axialen Erstreckung der Verbindungsanordnung erfolgen, wobei diese Art der Montage aufgrund der schlechten Zugänglichkeit der Verbindungsanordnung zwischen den Anschlussteilen der Solarkollektoren sehr aufwändig und umständlich ist, da sie zudem in der Regel auf Dächern erfolgt. Weiterhin können die einzelnen Solarkollektoren entsprechend nur sequentiell montiert und demontiert werden. Der Austausch eines einzigen Solarkollektors erfordert damit im ungünstigsten Fall die Demontage des halben Kollektorfeldes.

Der Erfindung liegt die Aufgabe zugrunde, eine Verbindungsanordnung der eingangs genannten Art dahingehend weiterzuentwickeln, dass eine Montage und Demontage einzelner Solarkollektoren ohne Abbau des restlichen Kollektorfeldes möglich ist, wobei zudem die auf dem Dach auszuführenden Arbeiten vereinfacht werden sollen.

Die Erfindung löst die Aufgabe durch eine Verbindungsanordnung mit den Merkmalen des Schutzanspruchs 1. Vorteilhafte Weiterbildungen der erfindungsgemäßen Verbindungsanordnung sind Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist eine Verbindungsanordnung für Solarkollektoren, die im Betrieb von einem zu erwärmenden Fluid durchströmt sind und die entsprechende Anschlussteile aufweisen, mit einem flexiblen metallischen Verbindungsteil zum paarweisen Verbinden der Anschlussteile dadurch gekennzeichnet, dass das Verbindungsteil in einem Bereich seiner Längserstreckung an einer Trennstelle in wenigstens zwei Verbindungselemente geteilt ist, wobei die Verbindungselemente an der Trennstelle lösbar zu dem Verbindungsteil verbindbar sind.

Ein grundlegendes Merkmal der erfindungsgemäßen Verbindungsanordnung sieht demnach vor, dass diese ein Verbindungsteil aufweist, das sich aus wenigstens zwei Verbindungselementen zusammensetzt, die an der Trennstelle lösbar zu dem Verbindungsteil verbunden bzw. verbindbar sind. Durch diese Trennung des Verbindungsteils in zwei einzelne Verbindungselemente wird eine vereinfachte Montage und Demontage von Solarkollektoren ermöglicht, da es erfindungsgemäß möglich ist, die einzelnen Verbindungselemente bereits vorab an einzelnen zu verbindenden Solarkollektoren zu montieren, diese dann auf einer entsprechenden Tragkonstruktion anzuordnen und anschließend durch einfaches Verbinden der Verbindungselemente an der Trennstelle hydraulisch miteinander zu koppeln. Abgesehen davon, dass die Trennstelle bezüglich einer Längserstreckung des Verbindungsteils insbesondere mittig angeordnet sein kann, so dass sie verglichen mit dem Stand der Technik wesentlich leichter zugänglich ist, reduziert sich auf diese Weise die insbesondere auf einem Dach auszuführende Montage- bzw. Demontagetätigkeit auf das Anbringen bzw. Lösen einer einzelnen Verbindung, wodurch die entsprechenden Arbeitsabläufe deutlich vereinfacht werden.

Ein wesentlicher Vorteil der vorliegenden Erfindung besteht in der nun erstmals möglichen Trennung der Arbeitsabläufe beim Montieren in Montage der Solarkollektoren einerseits und hydraulisches Verbinden der Solarkollektoren andererseits, was von unterschiedlichen Monteuren durchgeführt werden und somit auch zeitlich versetzt erfolgen kann.

Im Zuge einer vorteilhaften Weiterbildung der erfindungsgemäßen Verbindungsanordnung ist zum Verbinden der einzelnen Verbindungselemente im Bereich der Trennstelle ein Verbindungsmittel vorgesehen, das insbesondere als V-Schelle ausgebildet sein kann.

Bei einer anderen Weiterbildung der erfindungsgemäßen Verbindungsanordnung ist das Verbindungsmittel zumindest hinsichtlich des Schließvorgangs für eine werkzeuglose Betätigung ausgebildet, insbesondere als Spannschelle oder dergleichen.

Bei der anderen Ausgestaltung der erfindungsgemäßen Verbindungsanordnung wirken die Verbindungselemente und das Verbindungsmittel im Bereich der Trennstelle mit einem geeigneten Dichtmittel zusammen, das im Zuge von Weiterbildungen der Erfindung als Trapezdichtung, O-Ringdichtung oder Flachdichtung ausgebildet sein kann.

Um insbesondere die Montage der erfindungsgemäßen Verbindungsanordnung zu erleichtern, sieht eine andere Weiterbildung derselben vor, dass das Dichtmittel auch unabhängig von einem Verbinden der Verbindungselemente, das heißt beispielsweise unabhängig von einem entsprechenden Anpressdruck an einem der Verbindungselemente festgelegt ist, so dass eine separate Handhabung des Dichtmittels während der Montagetätigkeit entfällt.

Im Zuge entsprechender Weiterbildungen der erfindungsgemäßen Verbindungsanordnung ist es grundsätzlich möglich, die Verbindungselemente an ihren der Trennstelle abgewandten Enden mit den entsprechenden Anschlussteilen der Solarkollektoren durch Verpressen und/oder Verkleben zu befestigen. Vorteilhafterweise kommen im Zuge alternativer Ausgestaltungen der vorliegenden Erfindung jedoch auch in diesen Bereichen lösbare Anschlussverbindungen zum Einsatz, die beispielsweise in Form von insbesondere zugfesten Steckkupplungen ausgeführt sein können.

Zu diesem Zweck sieht eine andere Weiterbildung der erfindungsgemäßen Verbindungsanordnung vor, dass wenigstens eines der Verbindungselemente an seinem der Trennstelle abgewandten Ende eine in Umfangsrichtung verlaufende erste Rille aufweist. Diese wirkt in einem angeschlossenen Zustand mit einer ebenfalls in Umfangsrichtung verlaufenden zweiten Rille an wenigstens einem der Anschlussteile zusammen, wobei zwischen den ersten und zweiten Rillen ein umlaufender Freiraum geschaffen ist, in den ein Sicherungselement im Wesentlichen formschlüssig eingesetzt ist, um das Verbindungselement an das Anschlussteil anzuschließen. Das Sicherungselement kann insbesondere aus einem flexiblen Material bestehen und lässt sich so auch nach einem Zusammenfügen von Verbindungselement und Anschlussteil in den Freiraum einführen, um die Zugfestigkeit der Verbindung herzustellen. Im Zuge alternativer Weiterbildungen der erfindungsgemäßen Verbindungsanordnung ist dabei vorgesehen, dass das Sicherungselement entweder als Spiralfederelement oder als flexibler Scherstab ausgebildet ist.

Alternativ zu dem bereits angesprochenen Verpressen oder Verkleben von Verbindungselement und Anschlussteil kann im Zuge einer anderen Weiterbildung der erfindungsgemäßen Verbindungsanordnung auch vorgesehen sein, dass wenigstens ein Verbindungselement an seinem der Trennstelle abgewandten Ende durch Verschrauben, insbesondere mittels einer Überwurfmutter, die mit einem entsprechenden Gewindegegenstück zusammenwirkt, an einem der Anschlussteile befestigt ist.

Um die Dichtheit der erfindungsgemäßen Verbindungsanordnung zu gewährleisten, sehen entsprechende Weiterbildungen derselben vor, dass zwischen den Verbindungselementen und den Anschlussteilen entsprechende Dichtmittel vorhanden sind, die im Zuge bestimmter Ausgestaltungen der Erfindung insbesondere als O-Dichtringe und/oder als Flachdichtungen ausgebildet sein können.

Weitere Vorteile und Eigenschaften der vorliegenden Erfindung ergeben sich aus der nachfolgenden Beschreibung von Ausführungsbeispielen anhand der Zeichnung. Es zeigt/zeigen:
- Figur 1: eine schematische Darstellung einer erfindungsgemäßen V erbindungsanordnung für Sonnenkollektoren;
- Figur 2: detailliert eine erste Ausgestaltung einer erfindungsgemäßen Verbindungsanordnung, teilweise im Längsschnitt;
- Figur 3: einen Querschnitt durch die erfindungsgemäße Verbindungsanordnung entlang der Linie A-A in Figur 2;
- Figur 4: einen Längsschnitt durch eine weitere Ausgestaltung der erfindungsgemäßen Verbindungsanordnung;
- Figur 5: einen Längsschnitt durch eine weitere Ausgestaltung der erfindungsgemäßen Verbindungsanordnung;
- Figur 6: eine erste Ausgestaltung der Verbindung des flexiblen Verbindungsteils und eines entsprechenden Anschlussteils im Längsschnitt; und
- Figur 7 bis 11: jeweils eine weitere Ausgestaltung der Verbindung zwischen flexiblem Leitungsteil und einem entsprechenden Anschlussteil im Längsschnitt.

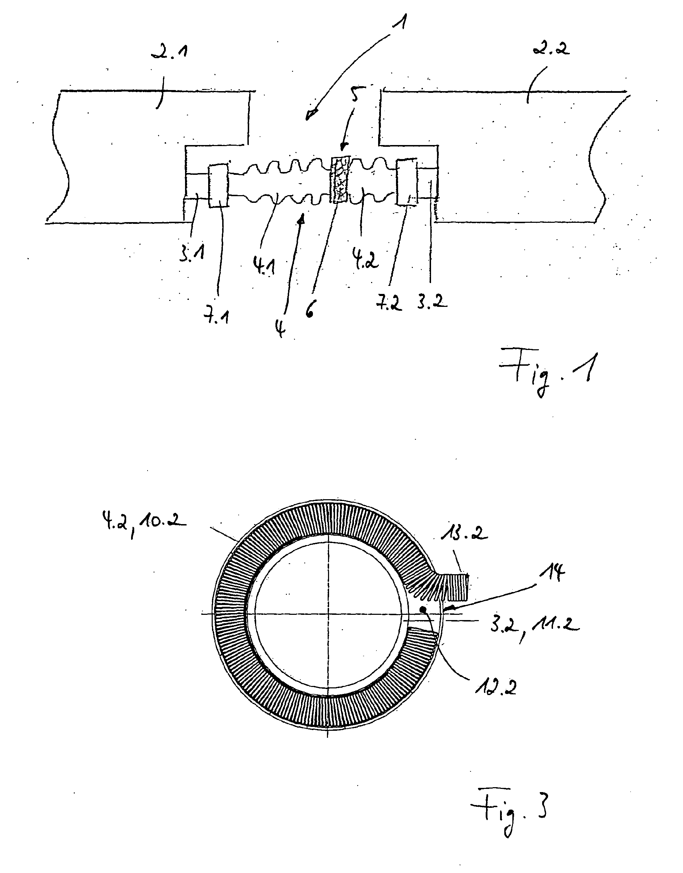

Figur 1 zeigt anhand einer schematischen Darstellung eine erfindungsgemäße Verbindungsanordnung 1, die zum Verbinden von Solarkollektoren 2.1, 2.2 eingesetzt ist. Die Solarkollektoren 2.1, 2.2 sind im Betrieb von einem zu erwärmenden Fluid (nicht gezeigt) durchströmt und weisen zu diesem Zweck entsprechende Anschlussteile in Form von Anschlussstutzen 3.1, 3.2 auf, die mit den Solarkollektoren 2.1, 2.2 fest verbunden und typischerweise in Kupfer ausgebildet sind. Die erfindungsgemäße Verbindungsanordnung 1 dient zum fluid-und insbesondere zum dampfdichten Verbinden der Solarkollektoren 2.1, 2.2 untereinander.

Zur Erleichterung der Montage, die regelmäßig an relativ schwer zugänglichen Orten, wie auf Dächern oder dergleichen, stattfindet, weist die Verbindungsanordnung 1 zum paarweisen Verbinden der Solarkollektoren 2.1, 2.2 bzw. der Anschlussteile 3.1, 3.2 ein flexibles metallisches Verbindungsteil 4 auf, dass vorliegend ringgewellter Metallschlauch oder Balg ausgebildet ist. Das Verbindungsteil oder der Balg 4 weist in einem Bereich seiner Längserstreckung eine Trennstelle 5 auf, an der er in zwei Verbindungselemente 4.1, 4.2 geteilt ist. Die beiden Verbindungselemente 4.1, 4.2 sind an der Trennstelle 5 unter Verwendung eines Verbindungsmittel 6 lösbar zu dem Verbindungsteil 4 verbunden.

An den von der Trennstelle 5 abgewandten Enden der Verbindungselemente 4.1, 4.2 sind weiterhin jeweils Anschlussverbindungen 7.1, 7.2 zum Anschließen bzw. Verbinden der Verbindungselemente 4.1, 4.2 mit einem entsprechenden Anschlussteil 3.1, 3.2 vorgesehen.

Wie in Figur 1 weiterhin dargestellt, sind die Anschlussteile 3.1, 3.2 der Solarkollektoren 2.1, 2.2 regelmäßig in nur schwer zugänglichen Bereichen angeordnet. Das Gleiche gilt entsprechend für die Anschlussverbindungen 7.1, 7.2 zwischen den Anschlussteilen 3.1, 3.2 und dem Verbindungsteil 4 bzw. den einzelnen Verbindungselementen 4.1, 4.2. Erfindungsgemäß ist daher vorgesehen, in einem von außen bei der Montage leichter zugänglichen Bereich zwischen den Solarkollektoren 2.1, 2.2 die Trennstelle 5 vorzusehen, so dass an dieser Stelle das Verbinden der einzelnen Verbindungselemente 4.1, 4.2 zu dem Verbindungsteil 4 ohne größeren Aufwand selbst an schwer zugänglichen Montageorten, wie auf einem Dach, erfolgen kann.

Erfindungsgemäß ist in diesem Zusammenhang weiterhin vorgesehen, dass die einzelnen Verbindungselemente 4.1, 4.2 bereits vor dem eigentlichen Verbinden der Solarkollektoren 2.1, 2.2 mittels der erfindungsgemäßen Erfindungsanordnung 1 insbesondere am Boden mittels der betreffenden Anschlussverbindung 7.1, 7.2, auf die weiter unten noch genauer eingegangen wird, mit den Anschlussteilen 3.1, 3.2 der Solarkollektoren 2.1, 2.2 verbunden werden. Anschließend ist auf dem Dach lediglich noch das Verbinden der Verbindungselemente 4.1, 4.2 im Bereich der Trennstelle 5 unter Verwendung insbesondere des Verbindungsmittels 6 erforderlich, worauf ebenfalls weiter unten noch genauer eingegangen wird. Das eigentliche Verbinden der Solarkollektoren 2.1, 2.2 reduziert sich somit auf das Anlegen einer einzigen (lösbaren) Verbindung im Bereich der Trennstelle 5. Aufgrund der flexiblen Ausgestaltung des Verbindungsteils 4 und damit auch der einzelnen Verbindungselemente 4.1, 4.2 ist im Bereich der Trennstelle 5 bei der Montage einer Beweglichkeit sowohl in horizontaler als auch in vertikaler Richtung in Figur 1 gegeben, was ein Ausgleichen von Montage- und Fertigungstoleranzen beträchtlich erleichtert.

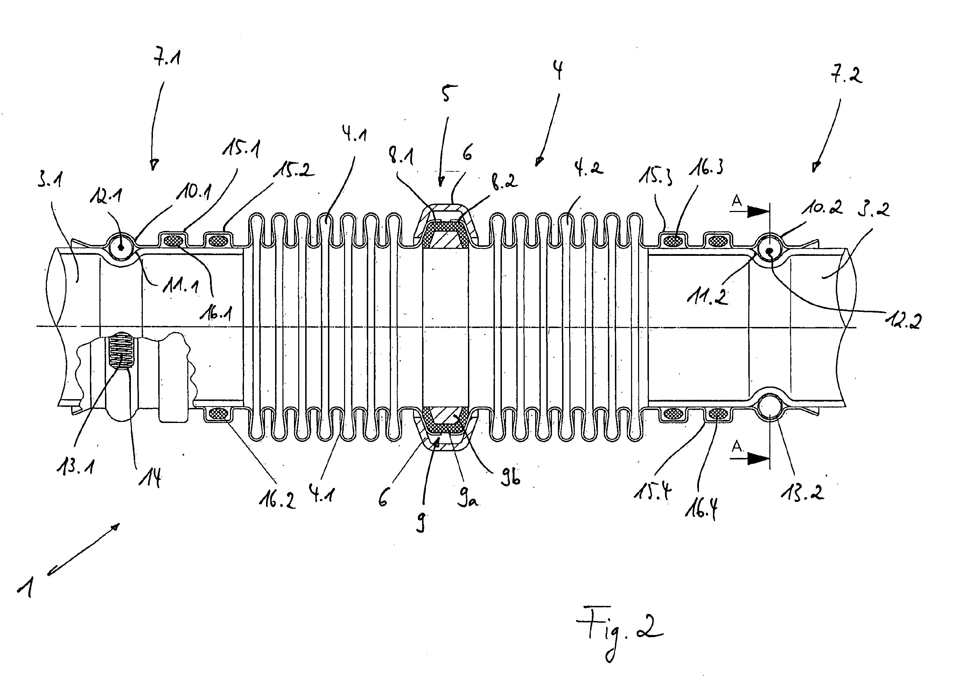

Figur 2 zeigt anhand eine detaillierte Längsschnittansicht einer Ausgestaltung der erfindungsgemäßen Verbindungsanordnung 1, wobei vorliegend auf eine explizite Darstellung der Solarkollektoren (vgl. Figur 1) verzichtet wurde. Gleiche oder vergleichbare Elemente sind innerhalb der Figuren mit denselben Bezugszeichen versehen.

Beim Gegenstand der Figur 2 ist das Verbindungsteil 4 als an der Trennstelle 5 mittig geteilter Balg ausgebildet, der sich aus den beiden Verbindungselementen 4.1, 4.2 zusammensetzt. Die Verbindungselemente 4.1, 4.2 weisen beiderseits der Trennstelle 5 jeweils eine Ausformung 8.1 bzw. 8.2 in Form eines V-Bords auf. Diese Ausführungen wirken mit dem Verbindungsmittel 6 zum Verbinden der Verbindungselemente 4.1, 4.2 zu dem Verbindungsteil 4 zusammen, wobei das Verbindungsmittel 6 vorliegend als V-Schelle ausgebildet ist. Das Verbindungsmittel 6, das heißt die V-Schelle ist vorteilhafterweise derart ausgebildet, dass sie werkzeuglos geöffnet und geschlossen werden kann. In diesem Zusammenhang kann das Verbindungsmittel 6 insbesondere als Spannschelle oder dergleichen ausgebildet sein, was in Figur 2 nicht explizit dargestellt ist. Im Bereich der Trennstelle 5 wirken das Verbindungsmittel 6 und die Ausformungen 8.1, 8.2 der Verbindungselemente 4.1, 4.2 mit einem Dichtmittel 9 zusammen, das vorliegend als ringförmige Dichtung mit trapezartigem Querschnitt (Trapezdichtung) ausgebildet ist, wobei das eigentliche Dichtelement 9a außen auf einem radial innenliegenden Stützring 9b angeordnet ist. Das Dichtmittel 9 ist dabei radial innerhalb der Ausformungen 8.1, 8.2 angeordnet, die durch das Verbindungsmittel 6 an das Dichtmittel 9 angepresst werden, so dass eine fluid- und dampfdichte Verbindung zwischen den Verbindungselementen 4.1, 4.2 resultiert.

Nachfolgend wird detailliert auf die Anbindung der Verbindungselemente 4.1, 4.2 an die Anschlussteile 3.1 bzw. 3.2 eingegangen, wobei Letztere vorliegend als Rohrleitungsstutzen, insbesondere aus Kupfer ausgebildet sind.

Wie der Figur 2 zu entnehmen ist, weisen die Verbindungselemente 4.1, 4.2 an ihren der Trennstelle 5 abgewandten Enden jeweils eine Rille 10.1, 10.2 auf, die in Umfangsrichtung verläuft. Außerdem weist jedes der Anschlussteile 3.1, 3.2 eine ebenfalls in Umfangsrichtung verlaufende Rille 11.1, 11.2 auf, wobei die Rillen 10.1, 10.2 der Verbindungselemente 4.1 bzw. 4.2 und die Rillen 11.1, 11.2 der Anschlussteile 3.1 bzw. 3.2 jeweils paarweise zusammenwirken, so dass dazwischen ein umlaufender Freiraum 12.1, 12.2 gebildet ist. In diesen Freiraum 12.1, 12.2 ist zum Anschließen des jeweiligen Verbindungselements 4.1, 4.2 an das entsprechende Anschlussteil 3.1, 3.2 ein Sicherungselement 13.1, 13.2 in Form einer Spiralfeder oder Zugfeder eingesetzt, dass den betreffenden Freiraum 12.1, 12.2 im Wesentlichen formschlüssig ausfüllt. Aufgrund der Ausbildung als Spiralfeder ist das Sicherungselement 13.1, 13.2 flexibel und kann so durch einen Durchbruch 14 im Bereich der Rille 10.1 der Anschlussteile 3.1, 3.2, der aus Gründen der Übersichtlichkeit nur im linken Teil der Figur 2 für das dortige Anschlussteil 3.1 explizit dargestellt ist, auch nach einem Zusammenfügen von Verbindungselement 4.1, 4.2 und Anschlussteil 3.1, 3.2 in den Freiraum 12.1, 12.2 eingeführt werden. Auf diese Weise ist eine in axialer Richtung der Verbindungsanordnung 1 zugfeste Verbindung zwischen den Anschlussteilen 3.1, 3.2 und den Verbindungselementen 4.1 bzw. 4.2 geschaffen.

Durch Vorsehen weiterer Strukturen an den Anschlussteilen 3.1, 3.2 und/oder dem Verbindungselement 4.1, 4.2, die in Figur 2 nicht explizit dargestellt sind, kann zudem eine drehfeste Verbindung zwischen den Anschlussteilen 3.1, 3.2 und Verbindungselementen 4.1, 4.2 geschaffen werden.

Alternativ zu der in Figur 2 gezeigten Ausgestaltung des Sicherungselements 13.1, 13.2 kann dieses auch als Scherstab aus einem geeigneten flexiblen Material, wie einem Kunststoffmaterial, ausgebildet sein, sofern dieses die Verwendungsanforderungen der erfindungsgemäßen Verbindungsanordnung insbesondere hinsichtlich der Betriebstemperatur erfüllt.

Die vorstehend beschriebene Anbindung der einzelnen Verbindungselemente 4.1, 4.2 des Verbindungsteils 4 an die betreffenden Anschlussteile 3.1, 3.2 hat den Vorteil, dass bei einer Beschädigung des Balgs dieser bzw. die einzelnen Verbindungselemente 4.1, 4.2 ohne größeren Aufwand von den Anschlussteilen 3.1, 3.2 lösbar sind, so dass zu Reparaturzwecken kein Austausch bzw. keine Demontage der Solarkollektoren (vgl. Figur 1) notwendig ist.

Wie der Darstellung in Figur 2 weiterhin zu entnehmen ist, weisen die Verbindungselemente 4.1, 4.2 an ihren der Trennstelle 5 abgewandten Enden weitere, rillenartige Ausformungen 15.1-15.4 auf, in denen zwischen dem jeweiligen Verbindungselement 4.1, 4.2 und dem zugehörigen Anschlussteil 3.1 bzw. 3.2 jeweils ein weiteres Dichtmittel 16.1-16.4 in Form eines O-Rings angeordnet ist. Auf diese Weise ergibt sich insgesamt eine fluid- und insbesondere dampfdichte Verbindungsanordnung 1 zum einfachen flexiblen Verbinden von Solarkollektoren (vgl. Figur 1).

Wie der Fachmann erkennt, ist die Ausgestaltung gemäß Figur 2 nicht auf die gezeigte mittige Anordnung der Trennstelle 5 bezüglich des Verbindungsteils 4 beschränkt. Insbesondere kann die Trennstelle 5 beim Gegenstand der Figur 2 auch - wie in der Figur 1 gezeigt - außermittig angeordnet sein.

Darüber hinaus ist die vorliegende Erfindung nicht auf die in Figur 2 gezeigte Kombination aus Balgverbindung mittels V-Schelle und Anbindung der Verbindungselemente 4.1, 4.2 an die Anschlussteile 3.1, 3.2 mittels der dargestellten zugfesten Verbindung beschränkt. Vielmehr lassen sich unterschiedliche Verbindungsarten des Verbindungsteils 4 mit unterschiedlichen Anbindungen an die Anschlussteile 3.1, 3.2 kombinieren, auf die weiter unten noch detailliert eingegangen wird. Darüber hinaus ist es grundsätzlich nicht erforderlich, auf beiden Seiten des Verbindungsteils 4 gleichartige Anbindungen an die Anschlussteile 3.1, 3.2 vorzusehen, wobei eine derartige Ausgestaltung allerdings aus Symmetriegründen bevorzugt sein kann.

Figur 3 zeigt einen Querschnitt der Verbindungsanordnung 1 in Figur 2, etwa entlang der Linie A-A in Figur 2. Diese Darstellung verdeutlicht nochmals, wie das Sicherungselement 14 in Form einer Spiralfeder gegebenenfalls auch nachträglich durch die Öffnung 14 in den Freiraum 12.2 zwischen dem Anschlussteil 3.2 und dem Verbindungselement 4.2 einführbar ist, so dass eine zugfeste Verbindung zwischen den beiden letztgenannten Elementen existiert. Anstelle der Feder 13.2 kann - wie gesagt - auch ein anderes flexibles Sicherungselement zum Einsatz kommen.

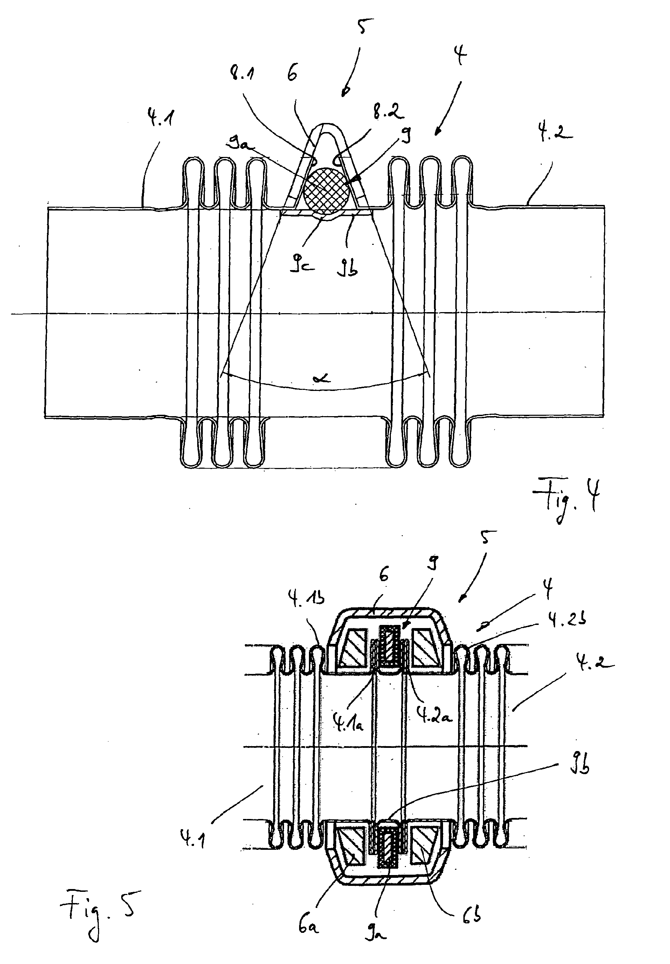

Figur 4 zeigt eine weitere Ausgestaltung der erfindungsgemäßen Verbindungsanordnung, wobei aus Gründen der Übersichtlichkeit vorliegend auf die Darstellung der Anschlussteile 3.1, 3.2 (vgl. Figuren 1 und 2) verzichtet wurde. Dargestellt ist allein das Verbindungsteil 4, das sich wiederum aus zwei getrennten bzw. trennbaren Verbindungselementen 4.1, 4.2 zusammensetzt. Die einzelnen Verbindungselemente 4.1 und damit das gesamte Verbindungsteil 4 sind als Bälge ausgebildet und an der Trennstelle 5 lösbar miteinander verbunden. Zu diesem Zweck weisen die Verbindungselemente 4.1, 4.2 wiederum endständige Ausformungen 8.1, 8.2 in Form von V-Borden auf, die zum Verbinden der Verbindungselemente 4.1, 4.2 mit einem Verbindungsmittel 6 in Form einer V-Schelle zusammenwirken. Zwischen den Ausformungen 8.1, 8.2 ist ein Dichtmittel 9 vorgesehen, das vorliegend als einfacher O-Ring ausgebildet ist. Dieses ist in radialer Richtung durch ein ringförmiges oder rohrabschnittförmiges Stützelement 9b gestützt, das zudem eine umlaufende Rille 9c aufweist, in der das Dichtmittel 9 zumindest abschnittsweise formschlüssig aufgenommen ist.

Der Öffnungswinkel α der V-Schelle 6 beträgt beim Ausführungsbeispiel in der Figur 4 α = 40°, ohne dass die vorliegende Erfindung auf diesen oder ähnliche Werte beschränkt wäre.

Figur 5 zeigt in einer der Figur 4 entsprechenden Ansicht eine weitere Ausgestaltung der Verbindung der Verbindungselemente 4.1, 4.2 im Bereich der Trennstelle 5. Das Verbindungsmittel 6 ist wiederum als V-Schelle ausgebildet, die jedoch insbesondere gegenüber der Ausgestaltung in Figur 4 in axialer Richtung verbreitert ausgeführt ist. Die beiden Verbindungselemente 4.1, 4.2 sind wiederum als Bälge ausgeführt, bei denen jeweils die letzte Welle 4.1 a, 4.2a als gestauchte Welle ausgebildet ist. Zwischen den endständigen, gestauchten Wellen 4.1 a, 4.2a ist ein Dichtmittel 9 in Form einer Flachdichtung 9a mit einem im Wesentlichen ringförmigen, radial innenliegenden Stützelement 9b angeordnet. Das Verbindungsmittel 6 greift jeweils in einem Bereich zwischen der endständigen Balgwelle 4.1 a, 4.2a und einer benachbarten Balgwelle 4.1 b, 4.2b in das Verbindungselement 4.1 bzw. 4.2 ein, wobei zwischen dem Verbindungsmittel 6 und der jeweils endständigen Balgwelle 4.1a, 4.2a ein Freiraum verbleibt, in dem jeweils ein Stützring 6a bzw. 6b mit trapezförmigem Querschnitt angeordnet ist, über den das Verbindungsmittel 6 auf die Flachdichtung 9a einwirkt.

In Abweichung von der vorbestimmten Beschreibung der Figur 5 ist es im Rahmen der vorliegenden Erfindung auch möglich, kein zusätzliches Stützelement 9b für die Flachdichtung 9a vorzusehen, sondern diese als quasi integralen Bestandteil eines der beiden Verbindungselemente 4.1, 4.2 auszubilden, die dementsprechend im Bereich ihrer endständigen Wellen 4.1 a, 4.2a eine entsprechende Ausgestaltung aufweisen, in der die Flachdichtung 9a insbesondere unverlierbar gehalten ist.

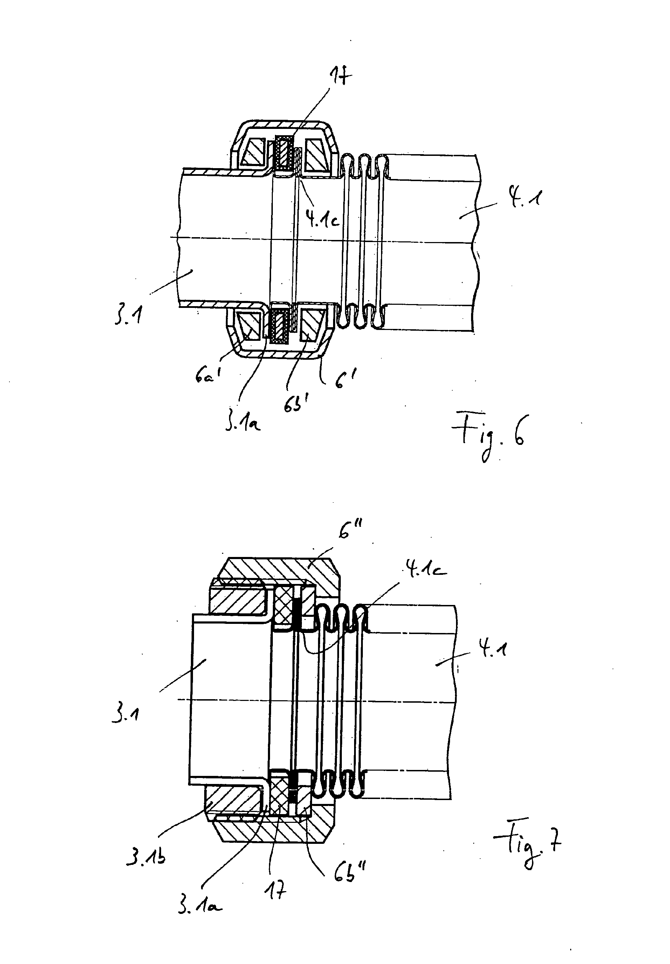

Figur 6 zeigt eine Anwendung der Verbindungsart gemäß Figur 4 auf die Anbindung des Verbindungselements 4.1 an das zugehörige Anschlussteil 3.1. Zu diesem Zweck ist an dem Anschlussteil 3 ein radial abgewinkelter Bord 3.1 a ausgebildet, der die Funktion der umgeformten endständigen Balgwellen auf einer Seite eines Dichtmittels 17 in Form einer Flachdichtung übernimmt, wobei die Funktion letzterer derjenigen der O-Ringdichtungen 16.1, 16.2 in Figur 2 entspricht. Das Verbindungselement 4.1 weist an seinem in Figur 6 gezeigten Ende, das der Trennstelle 5 (vgl. Figur 5) abgewandt ist, geeignete Aus- bzw. Umformungen 4.1 c seiner Balgwellen auf, wie grundsätzlich weiter oben anhand der Figur 5 bereits detailliert erläutert. Zum Verbinden dient erneut ein Verbindungsmittel 6' in Form einer V-Schelle, wobei zum Einwirken auf die Dichtung 17 beiderseits derselben wiederum Stützringe 6a', 6b' zum Einsatz kommen. Zu weiteren Einzelheiten wird auf diesbezüglichen Ausführungen zur Figur 5 verwiesen.

Figur 7 zeigt eine Abwandlung der Anbindung gemäß Figur 6, bei der als Verbindungsmittel anstelle einer V-Schelle eine Überwurfmutter 6" zum Einsatz kommt, die mit einem ringförmigen Gewindeteil 3.1 b an dem Anschlussteil 3.1 zusammenwirkt. Die Überwurfmutter 6" übergreift in axialer Richtung das Ende des Verbindungselements 4.1 mit samt der dort angeordneten Dichtung 17 sowie eine Stützscheibe 6b", welche hinsichtlich Anordnung und Funktion dem Stützring 6b' in Figur 6 entspricht.

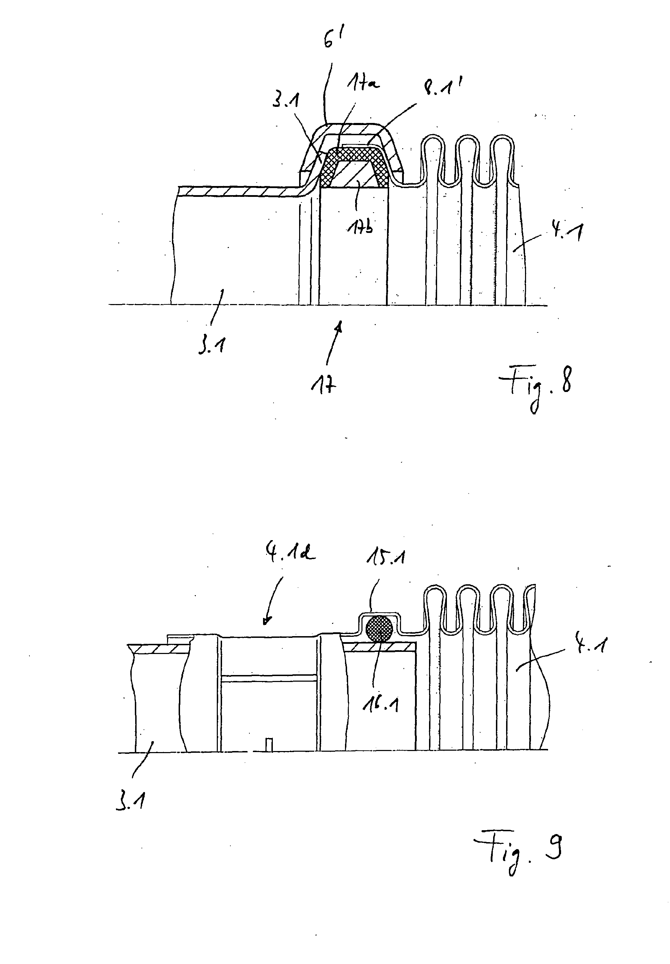

Figur 8 zeigt eine alternative Anbindung des Verbindungselements 4.1 an das Anschlussteil 3.1, die im Wesentlichen der in Figur 2 gezeigten und dort ausführlich erläuterten Verbindung zwischen den beiden Verbindungselementen 4.1, 4.2 im Bereich der Trennstelle 5 entspricht. Dementsprechend weist die Dichtung 17 ein äußeres Dichtelement 17a und einen inneren Stützring 17b auf und ist als Ganze im Querschnitt trapezförmig, das heißt als Trapezdichtung ausgebildet. Der Bord 3.1 a des Anschlussteils 3.1 und die Ausformung 8.1' am Ende des Verbindungselements 4.1 sind (asymmetrisch) als V-Borde ausgebildet und übergreifen das Dichtmittel 17, wie in Figur 8 dargestellt. Die eigentliche Verbindung erfolgt wie in Figur 6 durch ein Verbindungsmittel 6' in Form einer V-Schelle, so dass auf weitere Einzelheiten der Anschlussverbindung gemäß Figur 8 vorliegend nicht weiter einzugehen ist.

Figur 9 zeigt eine alternative Anschlussverbindung zwischen Anschlussteil 3.1 1 und Verbindungselement 4.1, bei der das Verbindungselement 4.1 in seinem Endbereich 4.1 d mit dem Anschlussteil 3.1 verpresst ist. Weiterhin ist zwischen dem Verpressbereich 4.1d und den Balgwellen des Verbindungselements 4.1 eine rillenförmige Ausformung 15.1 des Verbindungselements 4.1 vorgesehen (vgl. Figur 2), in deren Bereich zwischen dem Verbindungselement 4.1 und dem Anschlussteil 3.1 eine Dichtung 16.1 in Form eines O-Rings eingesetzt ist.

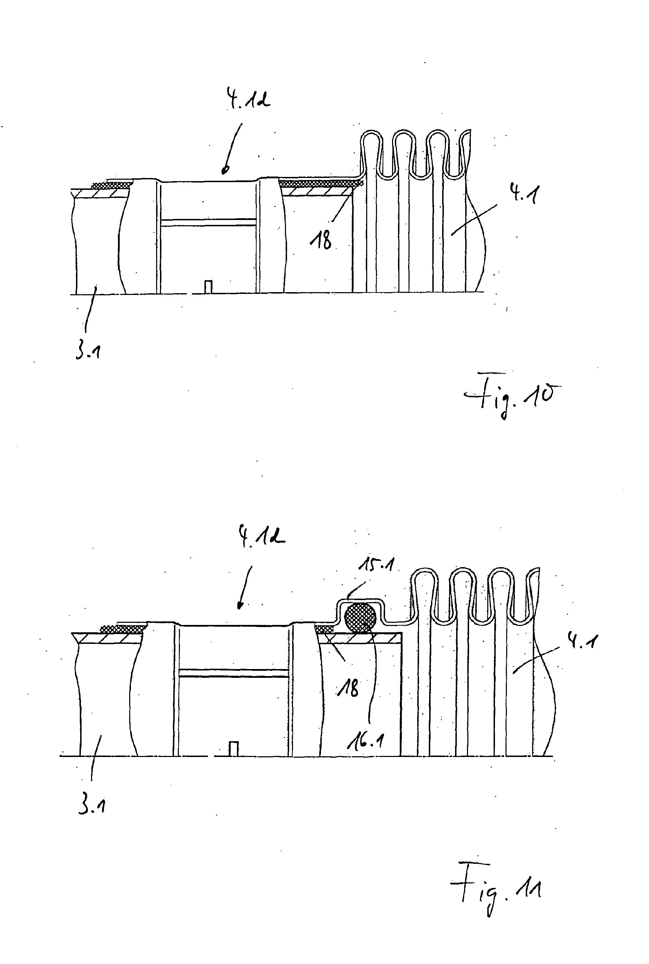

Figur 10 zeigt eine erste Abwandlung der Ausgestaltung gemäß Figur 9, bei der anstelle der Ausformung 15.1 und der O-Ringdichtung 16.1 zwischen dem Verbindungselement 4.1 und dem Anschlussteil 3.1 eine Dichtung in Form einer Klebeschicht 18 vorgesehen ist.

Die Ausgestaltung gemäß Figur 11 stellt eine Kombination der Ausgestaltungen in Figur 9 und Figur 10 dar, bei der einerseits eine Klebeschicht 18 zwischen dem Verbindungselement 4.1 und dem Anschlussteil 3.1 vorhanden ist, an die sich andererseits eine rillenförmige Ausnehmung 15.1 des Verbindungselements 4.1 mit eingelegter O-Ringdichtung 16.1 anschließt.

Wie der Fachmann erkennt, können alle Anschlussverbindungen, die vorstehend anhand der Figuren 6 bis 11 beschrieben wurden, sowohl auf einer als auch auf beiden Seiten des Verbindungsteils 4 verwendet und diesbezüglich beliebig kombiniert werden (vgl. Verbindungen 7.1, 7.2 in Figur 1). Darüber hinaus können die Anschlussverbindungen gemäß den Figuren 6 bis 11 beliebig mit den Verbindungen zwischen den Verbindungselementen 4.1, 4.2 im Bereich der Trennstelle 5 kombiniert werden, wobei Letztere exemplarisch anhand der Figuren 2, 4 und 5 beschrieben wurden.

Bei sämtlichen Verbindungen bzw. Anbindungen gemäß den Figuren 1 bis 8 können die Verbindungsmittel als werkzeuglos zu betätigenden Verbindungsmitteln, insbesondere in Form von Spannschellen (V-Schellen) ausgebildet sein.

Die Anbindungen gemäß den Figuren 6 bis 8 besitzen gegenüber denjenigen der Figuren 9 bis 11 den Vorteil, dass bei einer Beschädigung des Verbindungselements (Balgs) 4.1 in der Regel keine Demontage von Solarkollektoren (vgl. Figur 1) erforderlich ist.

## Patentansprüche

1. Verbindungsanordnung (1) für Solarkollektoren (2.1, 2.2), die im Betrieb von einem zu erwärmenden Fluid durchströmt sind und die entsprechende Anschlussteile (3.1, 3.2) aufweisen, mit einem flexiblen metallischen Verbindungsteil (4) zum paarweisen Verbinden der Anschlussteile (3.1, 3.2), **dadurch gekennzeichnet, dass** das Verbindungsteil (4) in einem Bereich seiner Längserstreckung an einer Trennstelle (5) in wenigstens zwei Verbindungselemente (4.1, 4.2) geteilt ist, wobei die Verbindungselemente (4.1, 4.2) an der Trennstelle (5) lösbar zu dem Verbindungsteil (4) verbindbar sind.

2. Verbindungsanordnung (1) nach Anspruch 1, **dadurch gekennzeichnet, dass** die Trennstelle (5) mittig bezüglich der Längserstreckung des Verbindungsteils (4) angeordnet ist.

3. Verbindungsanordnung (1) nach Anspruch 1, **dadurch gekennzeichnet, dass** die Trennstelle (5) bezüglich der Längserstreckung des Verbindungsteils (4) außermittig angeordnet ist.

4. Verbindungsanordnung (1) nach mindestens einem der Ansprüche 1 bis 3, **dadurch gekennzeichnet, dass** das flexible metallische Verbindungsteil (4) zumindest abschnittsweise als Balg ausgebildet ist.

5. Verbindungsanordnung (1) nach mindestens einem der Ansprüche 1 bis 4, **dadurch gekennzeichnet, dass** das flexible metallische Verbindungsteil (4) beiderseits der Trennstelle (5) an den Verbindungselementen (4.1, 4.2) jeweils eine Ausformung (8.1, 8.2) aufweist, die zum Verbinden der Verbindungselemente (4.1, 4.2) mit wenigstens einem Verbindungsmittel (6) und mit wenigstens einem Dichtmittel (9) zusammenwirken.

6. Verbindungsanordnung (1) nach Anspruch 5, **dadurch gekennzeichnet, dass** die Ausformung (8.1, 8.2) als V-Bord und das Verbindungsmittel (6) als V-Schelle ausgebildet ist.

7. Verbindungsanordnung (1) nach Anspruch 5 oder 6, **dadurch gekennzeichnet, dass** das das Verbindungsmittel (6) zumindest zum werkzeuglosen Schließen ausgebildet ist, insbesondere als Spannschelle oder dergleichen.

8. Verbindungsanordnung (1) nach mindestens einem der Ansprüche 5 bis 7, **dadurch gekennzeichnet, dass** das Dichtmittel (9) unabhängig von dem Verbinden der Verbindungselemente (4.1, 4.2) an einem der Verbindungselemente (4.1, 4.2), insbesondere im Bereich einer endständigen Balgwelle (4.1a, 4.1 b) desselben, festgelegt ist.

9. Verbindungsanordnung (1) nach mindestens einem der Ansprüche 5 bis 8, **dadurch gekennzeichnet, dass** das Dichtmittel (9) als Trapezdichtung, als O-Ringdichtung oder als Flachdichtung ausgebildet ist.

10. Verbindungsanordnung (1) nach mindestens einem der Ansprüche 5 bis 9, **dadurch gekennzeichnet, dass** insbesondere im Bereich der Trennstelle (5) wenigstens ein Stützelement (9b) für das Dichtmittel (9) und/oder für das flexible Verbindungsteil (4) vorgesehen ist.

11. Verbindungsanordnung (1) nach mindestens einem der Ansprüche 1 bis 10, **dadurch gekennzeichnet, dass** wenigstens eines der Verbindungselemente (4.1, 4.2) an seinem der Trennstelle (5) abgewandten Ende eine in Umfangsrichtung verlaufende erste Rille (10.1, 10.2) aufweist und dass wenigstens eines der Anschlussteile (3.1, 3.2) eine in Umfangsrichtung verlaufende zweite Rille (11.1, 11.2) aufweist, wobei die ersten und zweiten Rillen (10.1, 10.2; 11.1, 11.2) unter Ausbildung eines umlaufenden Freiraums (12.1, 12.2) zusammenwirken, in den zum Anschließen des wenigstens einen Verbindungselements (4.1, 4.2) an das wenigstens eine Anschlussteil (3.1, 3.2) ein Sicherungselement (13.1, 13.2) im Wesentlichen formschlüssig eingesetzt ist.

12. Verbindungsanordnung (1) nach Anspruch 11, **dadurch gekennzeichnet, dass** das wenigstens eine Verbindungselement (4.1, 4.2) oder das wenigstens eine Anschlussteil (3.1, 3.2) im Bereich der Rille (10.1, 10.2; 11.1, 11.2) einen Durchbruch (14) aufweist, durch den das Sicherungselement (13.1, 13.2) aus einem flexiblen Material nach einem Zusammenfügen von Verbindungselement (4.1, 4.2) und Anschlussteil (3.1, 3.2) in den Freiraum (12.1, 12.2) einführbar ist.

13. Verbindungsanordnung (1) nach Anspruch 11 oder 12, **dadurch gekennzeichnet, dass** das Sicherungselement (13.1, 13.2) als Spiralfederelement oder als flexibler Scherstab ausgebildet ist.

14. Verbindungsanordnung (1) nach mindestens einem der Ansprüche 1 bis 13, **dadurch gekennzeichnet, dass** wenigstens ein Verbindungselement (4.1, 4.2) an seinem der Trennstelle (5) abgewandten Ende durch Verpressen, durch Verkleben oder durch Verschrauben, insbesondere mittels einer Überwurfmutter (6"), an einem der Anschlussteile (3.1, 3.2) befestigt ist.

15. Verbindungsanordnung (1) nach mindestens einem der Ansprüche 1 bis 18, **dadurch gekennzeichnet, dass** zwischen wenigstens einem Verbindungselement (4.1, 4.2) an seinem der Trennstelle (5) abgewandten Ende und einem der Anschlussteile (3.1, 3.2) wenigstens ein weiteres Dichtmittel (17), insbesondere ein O-Dichtring oder eine Flachdichtung, angeordnet ist.
